# EUROPEAN PATENT SPECIFICATION

(11) **EP 3 967 896 B1**
(45) Date of publication and mention of the grant of the patent: **10.09.2025**
(21) Application number: 20802340.8
(22) Date of filing: 20.04.2020
(51) Int. Cl.: F16C 33/78, F16J 15/3204, F16C 19/52, F16C 19/06, F16J 15/3232, F16J 15/324, H02K 7/06, H02K 11/40, F16J 15/3208, H02K 5/10, H02K 5/124

(54) **SEALING DEVICE**
DICHTUNGSVORRICHTUNG
DISPOSITIF D'ÉTANCHÉITÉ

(30) Priority: 08.05.2019 JP 2019088583
(43) Date of publication of application: 16.03.2022
(73) Proprietor: NOK Corporation, Minato-ku Tokyo 105-8585 (JP)
(72) Inventor: SATO, Yuki, Fukushima-shi, Fukushima 960-1193 (JP); ITO, Takuya, Fukushima-shi, Fukushima 960-1193 (JP); SUGIHARA, Hiromi, Fukushima-shi, Fukushima 960-1193 (JP); TANIDA, Masayuki, Fukushima-shi, Fukushima 960-1193 (JP)
(74) Representative: TBK
(86) International application number: PCT/JP2020/017004
(87) International publication number: WO 2020/226042

(56) References cited:
- JP-A- 2006 046 565
- JP-A- 2006 046 565
- JP-A- 2006 234 093
- JP-A- 2011 241 868
- JP-A- 2014 240 676
- JP-U- H0 575 562
- JP-U- H0 680 956
- JP-U- H0 680 956

## Description

### Technical Field

The present invention relates to a sealing device, and particularly relates to a sealing device which prevents oil leakage from an end portion of a rotating shaft and entry of, e.g., dust from the outside in an automobile or the like.

### Background Art

Automobiles are being electrified in these years, and electric-powered automobiles, such as an EV (Electric Vehicle) and an HV (Hybrid Vehicle), are becoming mainstream. In each of the electric-powered automobiles, a drive motor is used as a power source. An induced current generated in the drive motor sometimes becomes electromagnetic noise to adversely affect an AM radio broadcast.

For the above-described reason, there is proposed a vehicle power transmission device which establishes continuity between a case and a drive shaft with a conductive brush of metal and forms a continuity channel for grounding to allow a leakage current from an electric motor responsible for high-frequency noise to escape through the continuity path (see, for example, Patent Literature 1).

There is also proposed an electromagnetic noise suppression device for an electric automobile in which an oil seal sealing a void between a through-hole of an electric motor housing and a rotating shaft of an electric motor with liquid tightness is formed of conductive rubber and which suppresses generation of noise by establishing electrical continuity between the electric motor housing and the rotating shaft with the oil seal having conductivity (see, for example, Patent Literature 2).

Additionally, there is available, as a sealing device for a hub bearing, a bearing seal which uses a seal lip member made of a rubber material containing conductive carbon to prepare for noise (see, for example, Patent Literature 3).

### Document List

### Patent Literatures

Patent Literature 1: Japanese Patent Application Publication JP 2015-207534 A
Patent Literature 2: Japanese Patent Application Publication JP 2000-244180 A
Patent Literature 3: Japanese Patent Application Publication JP 2015-14296 A
Patent Literature 4: JP H06 80956 U
Patent Literature 5: JP 2006 046565 A
Patent Literature 6: JP 2014 240676 A
Patent Literature 7: JP 2006 234093 A

JP H06 80956 U discloses a sealing device having the features of the preamble of claim 1.

JP 2006 046565 A discloses a sealing device having an elastic member with a left lip and a right lip contacting an upper outer peripheral surface of a ring member.

JP 2014 240676 A discloses a sealing device having an elastic member with a left lip and a right lip contacting an outer peripheral surface of a ring member.

JP 2006 234093 A discloses a sealing device, according to the preamble of claim 1, that is arranged between a first member and a second member and has a reinforcement ring; an elastic portion which is attached to the reinforcement ring and has a left lip and a right lip and an inter-lip space between the left lip and the right lip, wherein the left lip and the right lip have contact edges which are in contact with the outer peripheral surface of the second member.

### Summary of Invention

### Technical Problem

In the vehicle power transmission device according to Patent Literature 1 described above, however, a conductive brush needs to be separately added to a bearing and an oil seal. If an installation space cannot be secured, the vehicle power transmission device may be unusable.

In the electromagnetic noise suppression device according to Patent Literature 2 described above, for example, if the rotating shaft is eccentric or if wear is occurring at a lip tip end portion which contacts the rotating shaft due to long-term use of the oil seal having conductivity, the oil seal having conductivity and the rotating shaft may become separate, which makes it difficult to suppress generation of noise.

Although the sealing device according to Patent Literature 3 described above can suppress generation of radio noise, since three conductive lip portions are in contact with a hub ring, there is a need for further reduction in sliding friction.

The present invention has been made in view of the above-described problems, and has as an object to provide a sealing device capable of improving sealing performance and reducing sliding friction, and suppressing generation of noise.

### Solution to Problem

The above object is solved by a sealing device having the features of claim 1.

Further developments are stated in the dependent claims.

In a sealing device according to one aspect of the present invention, the tightening force provision member is placed at a position on an opposite side of the lip portion from the lip contact surface.

A sealing device according to one aspect of the present invention includes an interior side dust lip which is formed between the lip contact surface and the dust lip in the direction of the axis in the inter-lip space.

In a sealing device according to one aspect of the present invention, the lip contact surface has a surface in an annular shape which is parallel to the outer peripheral surface of the shaft. Alternatively, the lip contact surface may be formed into a shape with asperities.

### Effects of Invention

According to the sealing device according to the present invention, it is possible to implement a sealing device capable of improving sealing performance and reducing sliding friction, and suppressing generation of noise.

### Brief Description of Drawings

[Fig. 1] A partial enlarged sectional view showing a schematic configuration of a motor drive unit for an electric automobile in which a sealing device according to a first embodiment of the present invention is used.
[Fig. 2] A sectional view of a cross-section along an axis for showing a state where the sealing device according to the first embodiment of the present invention is placed in a gap between an opening of a casing and an output shaft.
[Fig. 3] A sectional view of the cross-section along the axis showing a configuration of the sealing device according to the first embodiment of the present invention.
[Fig. 4] A sectional view of the cross-section along the axis showing the configuration of the sealing device according to the first embodiment of the present invention.
[Fig. 5] A partial enlarged sectional view for showing an inner peripheral surface of an elastic portion in the sealing device according to the first embodiment of the present invention.
[Fig. 6] A partial enlarged sectional view of the motor drive unit, in which the sealing device according to the first embodiment of the present invention is used.
[Fig. 7] A sectional view of a cross-section along an axis showing a configuration of a sealing device according to a second embodiment of the present invention.
[Fig. 8] A sectional view of a cross-section along an axis showing a configuration of a sealing device according to a third embodiment of the present invention.

### Description of Embodiments

### <First Embodiment>

Hereinafter, a first embodiment of the present invention will be described with reference to the drawings.

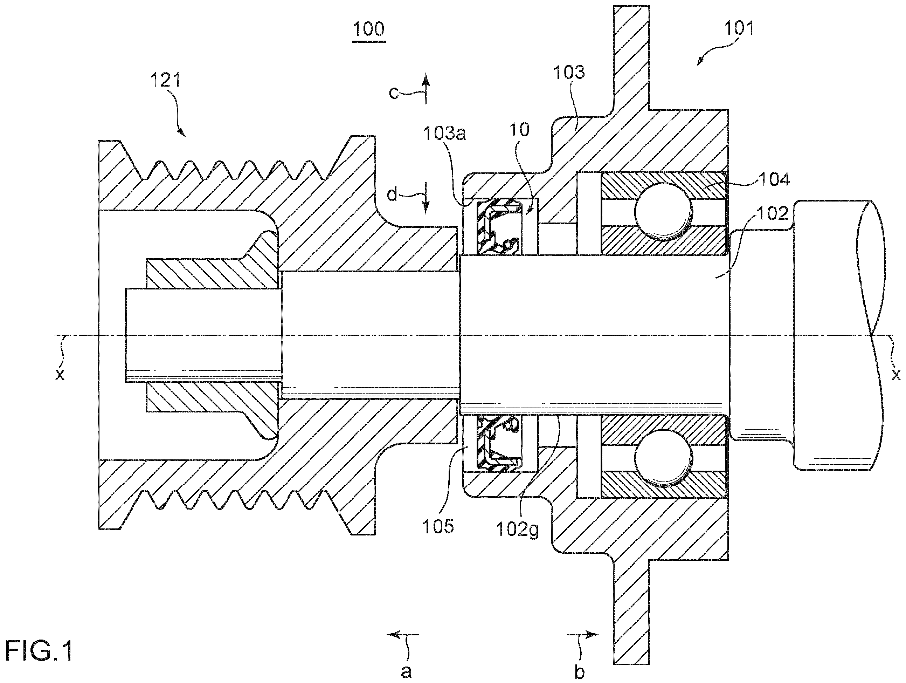

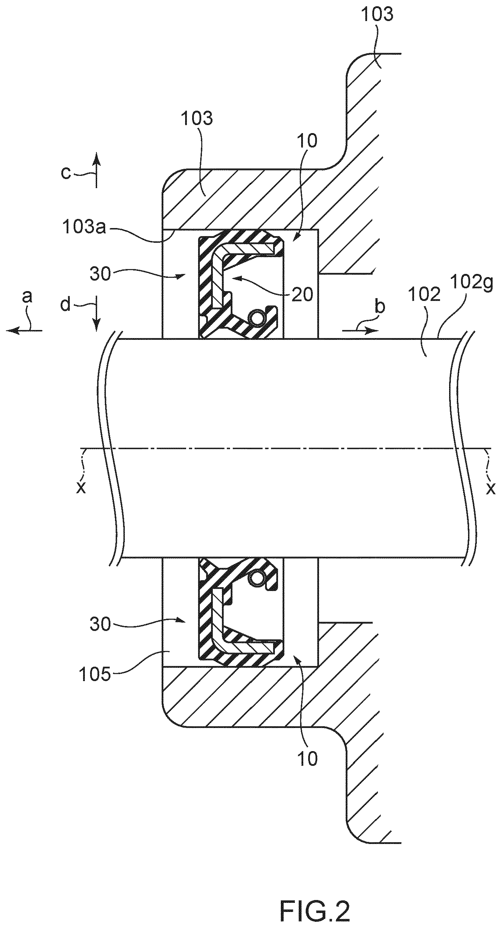

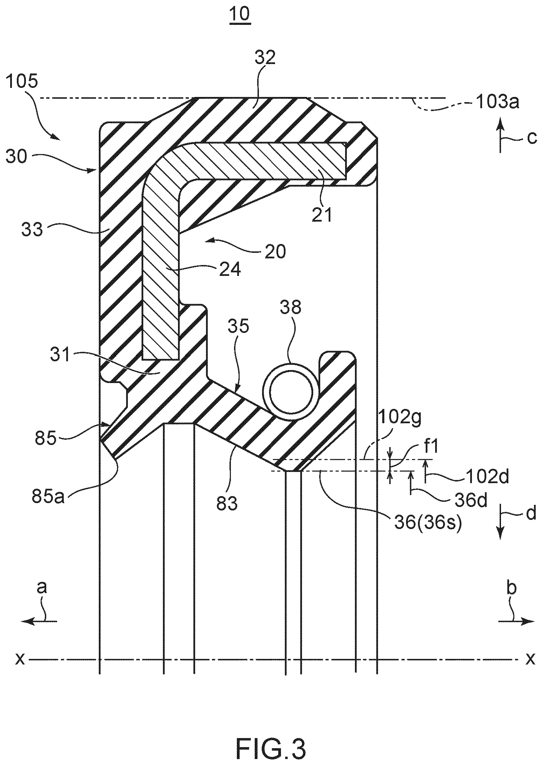

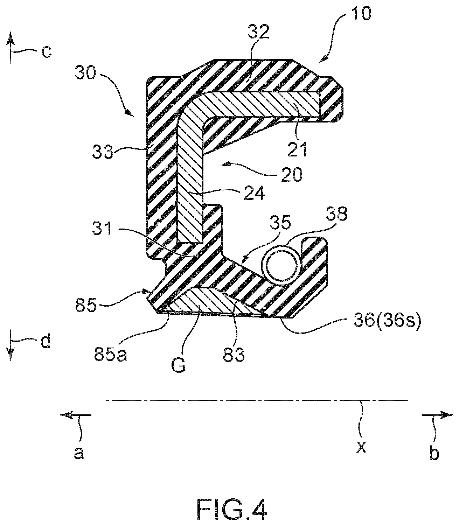

Fig. 1 is a partial enlarged sectional view showing a schematic configuration of a motor drive unit 100 for an electric automobile in which a sealing device 10 according to a first embodiment of the present invention is used. Fig. 2 is a sectional view of a cross-section along an axis x for showing a state where the sealing device 10 according to the first embodiment of the present invention is placed in a gap between an opening 105 of a casing 103 and an output shaft 102. Figs. 3 and 4 are sectional views of the cross-section along the axis x showing a configuration of the sealing device 10 according to the first embodiment of the present invention. Note that Fig. 3 shows a state where conductive grease G (to be described later) is not put in an inter-lip space for illustrative purposes.

Hereinafter, a side pointed to by reference character a as viewed from the sealing device 10 in each drawing is assumed as an exterior side, and a side pointed to by reference character b as viewed from the sealing device 10 is assumed as a motor interior side, for convenience of illustration. The exterior side here refers to a side outside the casing 103 on which muddy water or the like is present while the motor interior side refers to an interior side of the casing 103. In a direction (hereinafter also referred to as a radial direction) perpendicular to the axis x, a direction away from the axis x is assumed as an outer periphery side (a direction of an arrow c), and a direction toward the axis x is assumed as an inner periphery side (a direction of an arrow d).

As shown in Fig. 1, the sealing device 10 according to the first embodiment is especially applied to the motor drive unit 100 for an electric automobile. The motor drive unit 100 includes an electric motor 101 which drives a driving wheel and a pulley 121 which transmits power (rotation) of the output shaft 102 as a shaft in the electric motor 101. The pulley 121 is integrally fixed to the output shaft 102 of the electric motor 101, and a belt (not shown) is attached to the pulley 121. Power is transmitted to, e.g., auxiliary machines by rotating the belt.

The output shaft 102 of the electric motor 101 is pivotably supported by the casing 103 as an outer periphery side member via a bearing 104. In the opening 105 that lets the output shaft 102 of the motor drive unit 100 protrude, the sealing device 10 for preventing lubricating oil sealed in the casing 103 from leaking out and preventing dust, such as sand or muddy water, from entering from the outside is attached in a gap (space) in an annular shape between an inner peripheral surface 103a of the casing 103 made of metal and an outer peripheral surface 102g of the output shaft 102 made of metal.

That is, the sealing device 10 is intended to seal the gap in the annular shape between the opening 105 and the output shaft 102 at the time of transmission of power of the electric motor 101 via the output shaft 102 protruding from the opening 105 of the casing 103 in the motor drive unit 100.

Note that an object to be sealed by the sealing device 10 is not limited to the motor drive unit 100 for an electric automobile and that various other motor drive units, such as a motor drive portion of an in-wheel type motor, a motor drive unit of a hybrid automobile, a motor drive unit of an electric motorcycle, and a motor drive unit of an electric bicycle, can be set as objects to be sealed.

As shown in Figs. 2 and 3, the sealing device 10 is fit into the gap in the annular shape between the opening 105 of the casing 103 and the output shaft 102. The sealing device 10 includes a reinforcement ring 20 in an annular shape around the axis x of the output shaft 102 and an elastic portion 30 which is integrally attached to the reinforcement ring 20 and is made of an elastic body in an annular shape around the axis x. It is assumed here that the axis x of the output shaft 102 coincides with the axis x of the sealing device 10.

As shown in Figs. 3 and 4, the sealing device 10 according to the first embodiment of the present invention is a sealing device which is attached between the shaft 102 and the casing 103 as the outer periphery side member arranged around the axis on an outer periphery side as viewed from the shaft 102, slidably contacts the outer peripheral surface 102g of the shaft 102, and seals a void between the shaft 102 and the casing 103. Also, the sealing device 10 is applied to various motor drive units, such as the motor drive unit 100 for an electric automobile.

As shown in Fig. 4, the sealing device 10 includes the reinforcement ring 20 in the annular shape around the axis x, the elastic portion 30 that is attached to the reinforcement ring 20 and is made of the elastic body in the annular shape around the axis x and having conductivity, and the conductive grease G. The elastic portion 30 has a base 31, a lip portion 35 which extends from the base 31 along the axis x, and at least one dust lip 85 as a dust lip in an annular shape around the axis. The lip portion 35 has, at a tip end of the lip portion 35, a lip tip end portion 36 having a lip contact surface 36s which is formed to be capable of contacting an outer peripheral surface (the outer peripheral surface 102g) of a shaft (the output shaft 102) such that the outer peripheral surface of the shaft is slidable. The lip contact surface 36s has a surface in an annular shape which faces an outer peripheral surface of a shaft, and the conductive grease G is adherent to an inner peripheral surface 83 which is a surface in an annular shape facing the inner periphery side of the elastic portion 30 so as to be present in at least a part of an inter-lip space S which is a space in an annular shape formed between the lip contact surface 36s and the dust lip 85 in a direction of the axis x. Hereinafter, the configuration of the sealing device 10 will be specifically described.

The reinforcement ring 20 is a member in an annular shape centered or approximately centered on the axis x, and made of metal, as shown in Figs. 3 and 4. For example, stainless steel or SPCC (cold rolled steel sheet) is named as the member made of metal used for the reinforcement ring 20. The reinforcement ring 20 is manufactured by, for example, pressing or forging such a member made of metal. The reinforcement ring 20 has, for example, a circular tubular portion 21 which is a portion in a circular tubular shape or an approximately circular tubular shape extending in the direction of the axis x, a disk portion 24 which is a portion in a hollow disk shape extending from an end portion on the exterior side of the circular tubular portion 21 toward the inner periphery side, and a conical ring portion which is a portion extending from an end portion on the inner periphery side of the disk portion 24 toward the interior side and obliquely toward the inner periphery side. As will be described later, the circular tubular portion 21 is formed such that the sealing device 10 can fit on the inner peripheral surface 103a of a through-hole formed in the casing 103 and is capable of contacting and fitting on the inner peripheral surface 103a of the through-hole via a portion as the elastic portion 30. The circular tubular portion 21 may be shaped to have a conical ring portion (not shown) formed at an intermediate portion of the circular tubular portion 21. Alternatively, the circular tubular portion 21 may be such that a part can directly contact and fit on the inner peripheral surface 103a.

The circular tubular portion 21 is fit into the opening 105 such that coincidence between the axis x of the sealing device 10 and the axis x of the output shaft 102 is achieved when the sealing device 10 is fitted on the inner peripheral surface 103a forming the opening 105 of the casing 103. The elastic portion 30 is attached to the reinforcement ring 20 so as to embrace the reinforcement ring 20 from the exterior side (the direction of the arrow a) and the outer periphery side (the direction of the arrow c), and the reinforcement ring 20 reinforces the elastic portion 30.

As shown in Figs. 3 and 4, the elastic portion 30 is attached to the reinforcement ring 20 and is formed integrally with the reinforcement ring 20 so as to cover the reinforcement ring 20. Specifically, the elastic portion 30 is molded by cross-linkage (vulcanization) molding using a mold. At the time of the cross-linkage molding, the reinforcement ring 20 is arranged in the mold, the elastic portion 30 is bonded to the reinforcement ring 20 by cross-linkage bonding, and the elastic portion 30 and the reinforcement ring 20 are integrally molded. The elastic portion 30 has the base 31 and the lip portion 35, as described above, and has the dust lip 85 as at least one dust lip. The conical ring portion of the reinforcement ring 20 extends into the base 31. The dust lip 85 extends obliquely from the base 31 toward the inner periphery side.

The elastic portion 30 has the base 31 that is located near the end portion on the inner periphery side (the direction of the arrow d) of the disk portion 24 in the reinforcement ring 20, a gasket portion 32 which is a portion attached to the circular tubular portion 21 of the reinforcement ring 20 from the outer periphery side (the direction of the arrow c), a cover portion 33 which is a portion attached to the disk portion 24 of the reinforcement ring 20 from the exterior side (the direction of the arrow a) between the base 31 and the gasket portion 32, and the lip portion 35, which extends from the base 31 toward the interior side (the direction of the arrow b) along the axis x and at which the lip tip end portion 36 protruding toward the inner periphery side (the direction of the arrow d) is formed.

The base 31 of the elastic portion 30 is a portion which supports the lip tip end portion 36 of the lip portion 35 so as to bring the lip tip end portion 36 in a state of being pressed against the outer peripheral surface 102g of the output shaft 102 into sliding contact and serves as a center when the lip portion 35 bends in accordance with a difference between an outer diameter 102d of the output shaft 102 and an inner diameter 36d of the lip tip end portion 36 of the lip portion 35, i.e., an interference f1.

The gasket portion 32 is a portion which covers the circular tubular portion 21 of the reinforcement ring 20 from the outer periphery side in the elastic portion 30. In the gasket portion 32, an outer diameter is equal to or slightly larger than an inner diameter of the inner peripheral surface 103a forming the opening 105 of the casing 103. For this reason, if the sealing device 10 is fitted into the opening 105 of the casing 103, the gasket portion 32 is compressed in the radial direction between the circular tubular portion 21 of the reinforcement ring 20 and the casing 103 to seal a void between the inner peripheral surface 103a of the casing 103 forming the opening 105 and the circular tubular portion 21 of the reinforcement ring 20.

With the above-described configuration, the gap in the annular shape between the opening 105 of the casing 103 and the output shaft 102 is sealed by the sealing device 10. Note that the gasket portion 32 is not limited to the one that covers a whole of an outer periphery side of the circular tubular portion 21, as shown in Fig. 4. For example, the gasket portion 32 may be one which covers a part of the outer periphery side of the circular tubular portion 21.

In the elastic portion 30, the lip portion 35 in an annular shape extends from the base 31 toward the interior side (the direction of the arrow b) and the inner periphery side (the direction of the arrow d), and the lip portion 35 has a shape which decreases in diameter toward the interior side (the direction of the arrow b) in the direction of the axis x and is conical tubular. That is, the lip portion 35 extends obliquely with respect to the axis x from the base 31 toward the lip contact surface 36s of the lip tip end portion 36 on the interior side (the direction of the arrow b) and on the inner periphery side (the direction of the arrow d) in a cross-section along the axis x (hereinafter also simply referred to as a cross-section).

The lip portion 35 has, on a tip end side which is away from the base 31 and on an interior side (the direction of the arrow b), the lip tip end portion 36 that protrudes toward the inner periphery side (the direction of the arrow d). In the lip portion 35, a recessed part is provided on an outer periphery side (the direction of the arrow c) on an opposite side from the lip tip end portion 36, and a garter spring 38 which is an elastic member in an annular shape as a tightening force provision member is placed in the recessed part.

The lip tip end portion 36 is a surface in an annular shape which faces the outer peripheral surface 102g of the shaft 102 in a cross-section and has the lip contact surface 36s that slidably contacts the outer peripheral surface 102g of the output shaft 102. The lip contact surface 36s is a surface in an annular shape which has a predetermined length in the direction of the axis x. That is, in the lip tip end portion 36, the lip contact surface 36s makes plane contact with the outer peripheral surface 102g of the shaft 102. The lip contact surface 36s has, for example, a surface in an annular shape (a cylindrical surface or an approximately cylindrical surface) which is parallel to the axis x parallel to the outer peripheral surface 102g of the shaft 102 and has a predetermined length (width), as shown in Fig. 4. Note that the lip contact surface 36s is not limited to the surface in the annular shape that is parallel to the axis x, as shown in Fig. 4, and may be, for example, a surface in an annular shape (a conical surface or an approximately conical surface) which increases in diameter from the motor interior side that is a sealed side, i.e., the interior side b toward the exterior side a and has a gentle slope.

The elastic portion 30 having the above-described lip portion 35 is made entirely of a conductive rubber containing a conductive filler, such as carbon black particles or metal powder. This conductive rubber is one which contains a conductive filler and has an electrical resistance which is relatively low. Assume here that volume electric resistivity of the conductive rubber is not more than 10⁸ Ω·cm. More specifically, the conductive rubber is formed by mixing respective desired amounts of an arbitrary rubber material, conductive particles, and a conductive fiber. For example, a synthetic rubber, such as nitrile-butadiene rubber (NBR), hydrogenated nitrile-butadiene rubber (H-NBR), acrylic rubber (ACM), fluoro-rubber (FKM), or silicone rubber, is named as the rubber material. As the conductive particles, a conductive metal oxide, such as graphite, an indium tin oxide, or an antimony tin oxide, can be used in addition to carbon black. Alternatively, an appropriate choice may be made among the materials, and the choice may be used. As the conductive fiber, there is available a stainless steel fiber, a carbon fiber (carbon fiber or carbon tube), or a conductive fiber obtained by plating potassium titanate. A thickness and a length of the conductive fiber are arbitrarily selectable.

The garter spring 38 is, for example, a spring member made of metal and is intended to bias the lip tip end portion 36 toward the inner periphery side (the direction of the arrow d) in the radial direction and provide a tightening force of a predetermined magnitude which presses the lip tip end portion 36 against the outer peripheral surface 102g of the output shaft 102. Note that the garter spring 38 is not limited to the one made of metal and may be one made of various other materials, such as resin.

That is, in the elastic portion 30, a sealing degree and sliding friction on the outer peripheral surface 102g of the output shaft 102 are determined in accordance with the interference f1 (Fig. 3) of the lip tip end portion 36 for the outer peripheral surface 102g of the output shaft 102, the tightening force of the garter spring 38, and followability of the lip contact surface 36s in the lip tip end portion 36 to the output shaft 102.

The dust lip 85 extends from the base 31 toward the exterior side and obliquely toward the inner periphery side and has a shape, such as a conical tubular shape or an approximately conical tubular shape. The dust lip 85 is formed such that a portion on a tip end side contacts an outer peripheral surface (the outer peripheral surface 102g) of a shaft (the output shaft 102) in a usage state (to be described later). An end portion on the inner periphery side of the dust lip 85 is a tip end 85a. Note that the dust lip 85 may be formed so as not to contact the outer peripheral surface (the outer peripheral surface 102g) of the shaft (the output shaft 102) in the usage state.

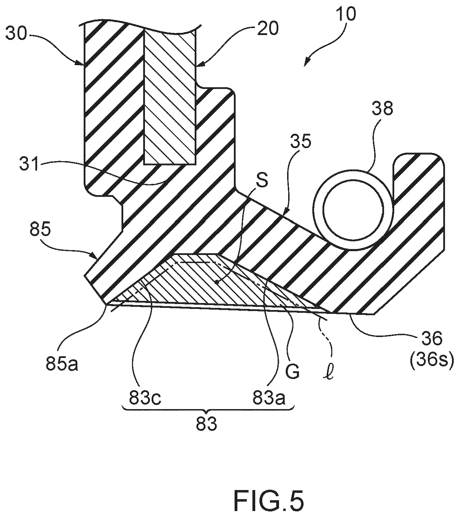

Fig. 5 is a partial enlarged sectional view for showing the inner peripheral surface 83 of the elastic portion 30 in the sealing device 10. The inner peripheral surface 83 that is a surface in an annular shape which faces the inner periphery side of the elastic portion 30 is a surface on the inner periphery side of the elastic portion 30 which faces a space, which the elastic portion 30 surrounds on the inner periphery side in the radial direction orthogonal to the axis x, and is a surface which contacts the space on the inner periphery side and forms contours on the inner periphery side of the elastic portion 30. In the sealing device 10 according to the present embodiment, the inner peripheral surface 83 is a surface which extends along an imaginary line l and is composed of an inner peripheral surface 83a of the lip portion 35 and an inner peripheral surface 83c of the dust lip 85, as shown in Fig. 5. The inner peripheral surface 83a of the lip portion 35 is a surface which extends along the imaginary line l shown in Fig. 5 and faces the inner periphery side of the lip portion 35 and is a portion on an outer side as viewed from the lip contact surface 36s in the lip tip end portion 36 of the surface facing the inner periphery side of the lip portion 35. The inner peripheral surface 83c of the dust lip 85 is a surface which extends along the imaginary line l shown in Fig. 5 and faces the inner periphery side of the dust lip 85 and is a portion on an interior side as viewed from the tip end 85a of the surface facing the inner periphery side of the dust lip 85.

The conductive grease G is adherent to the inner peripheral surface 83 and is adherent to the inner peripheral surface 83 such that the conductive grease G is present in at least a part of an inter-lip space S which the inner peripheral surface 83 forms and which is a space in an annular shape around the axis x. Specifically, the inter-lip space S is a space which a plane, extending between ones adjacent to each other of ends on the inner periphery side of portions protruding toward the inner periphery side of the inner peripheral surface 83, and the inner peripheral surface 83 form. In the present embodiment, a space on the inner periphery side of the inner peripheral surface 83, i.e., a space which a plane (a conical plane or a circular tubular plane) extending between an end portion on the exterior side a of the lip contact surface 36s of the lip tip end portion 36 of the lip portion 35 and the tip end 85a of the dust lip 85 surrounds is the inter-lip space S.

The conductive grease G is attached to the inner peripheral surface 83 so as to fill at least a part of the inter-lip space S, as described above, and is attached to the inner peripheral surface 83, for example, so as not to fully fill the inter-lip space S, as in the shown example. The conductive grease G may be attached to the inner peripheral surface 83 so as to fill a part of the inter-lip space S, may be attached to the inner peripheral surface 83 so as to fully fill the inter-lip space S, or may be attached to the inner peripheral surface 83 so as to overflow from the inter-lip space S. Alternatively, the conductive grease G may be attached to the inner peripheral surface 83 so as to jut out from the inter-lip space S.

The conductive grease G may be any one as long as the grease contains a conductive substance. A base oil used for the conductive grease G is not particularly limited, and it is possible to use all of the oils used as base oils of lubricating oils. The conductive substance only needs to be a substance having conductivity, and the substance having conductivity is not particularly limited. A substance good in conductivity is preferable as the conductive substance. The conductive substance may be a liquid or a solid. The conductive substance is, for example, carbon black. Assume here that volume electric resistivity of the conductive grease G is not more than 10⁸ Ω·cm.

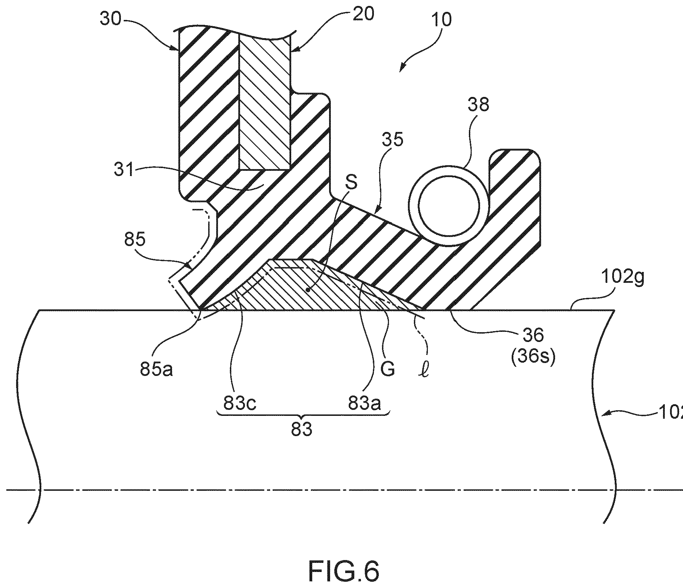

Action of the sealing device 10 according to the first embodiment of the present invention having the above-described configuration will be described. Fig. 6 is a view showing the sealing device 10 in the usage state and is a partial enlarged sectional view of a motor drive unit, in which the sealing device 10 according to the first embodiment of the present invention is used. The sealing device 10 that is applied to the motor drive unit 100 for an electric automobile is shown in Fig. 6.

In the usage state, the lip portion 35 and the dust lip 85 of the elastic portion 30 are in contact with the outer peripheral surface 102g of the output shaft 102 near the lip contact surface 36s and the tip end 85a that are respective tip ends to form a closed space between the inner peripheral surface 83 and the outer peripheral surface 102g of the output shaft 102. With this contact, the lip portion 35 and the dust lip 85 are deformed. In the usage state, the inter-lip space S deforms, and a capacity of the inter-lip space S in the usage state is smaller than a capacity of the inter-lip space S of the sealing device 10 in a non-attached state where the sealing device 10 is not attached. All of the lip portion 35 and the dust lip 85 may be configured not to deform in the usage state, or either one may be configured not to deform.

In the present embodiment, as described above, the conductive grease G is attached to the inner peripheral surface 83 so as to fill a part of the inter-lip space S in the non-attached state, and a volume of the conductive grease G attached to the inner peripheral surface 83 is not larger than the capacity of the inter-lip space S in the usage state. For this reason, it is possible to more reliably prevent the conductive grease G from expanding and the volume of the conductive grease G from becoming larger than the capacity of the inter-lip space S in the usage state. Thus, the lip portion 35 is prevented from floating upward, and contact between the lip contact surface 36s and the outer peripheral surface 102g of the output shaft 102 is prevented from being broken off. Similarly, contact of the dust lip 85 with the outer peripheral surface 102g of the output shaft 102 is prevented from being broken off. Note that, even if the lip portion 35 and the dust lip 85 do not deform in an attached state, it is similarly possible to obtain the effect of preventing flotation of a lip by attaching the conductive grease G to the inner peripheral surface 83 such that the conductive grease G fills a part of the inter-lip space S in the non-attached state.

As shown in Fig. 6, in the usage state, the conductive grease G attached to the inner peripheral surface 83 electrically connects the inner peripheral surface 83 of the elastic portion 30 and the outer peripheral surface 102g of the output shaft 102 except at portions of contact of the elastic portion 30 with the output shaft 102 to establish continuity. For this reason, it is possible to form a continuity path between the output shaft 102 and the casing 103 except at the portions of contact of the elastic portion 30 with the output shaft 102 and to reduce an electrical resistance between the output shaft 102 and the casing 103.

With the above-described configuration, when the sealing device 10 is fitted into the gap in the annular shape between the opening 105 of the casing 103 and the output shaft 102, the lip contact surface 36s of the lip tip end portion 36 in the lip portion 35 of the elastic portion 30 slidably contacts the outer peripheral surface 102g of the output shaft 102 while being pressed against the outer peripheral surface 102g due to the predetermined interference f1, and the sealing device 10 enters the usage state.

The sealing device 10 maintains a state where the lip contact surface 36s of the lip tip end portion 36 in the lip portion 35 of the elastic portion 30 is in close contact with the outer peripheral surface 102g of the output shaft 102 due to the interference f1 and the tightening force of the garter spring 38, even if the output shaft 102 is rotated by the motor drive unit 100. Thus, in the sealing device 10, the lip contact surface 36s of the lip tip end portion 36 of the lip portion 35 is pressed against the outer peripheral surface 102g of the output shaft 102 to seal in the conductive grease G as an object to be sealed. This makes it possible to prevent grease from flowing out toward the exterior side (the direction of the arrow a).

Here, in the sealing device 10, the lip contact surface 36s of the lip tip end portion 36 in the lip portion 35 of the elastic portion 30 has a surface in an annular shape which faces the outer peripheral surface 102g of the shaft 102, as described above. For this reason, the sealing device 10 can increase an area of contact (width of contact) without depending on the interference f1 and the tightening force. That is, the sealing device 10 has the lip contact surface 36s and can improve conductivity.

The lip contact surface 36s has the surface in the annular shape facing the outer peripheral surface 102g of the shaft 102, as described above. For this reason, in the sealing device 10, the lip tip end portion 36 in contact with the outer peripheral surface 102g of the shaft 102 is less deformable, unlike, for example, a sealing device in which a tip end portion to contact the outer peripheral surface 102g of the shaft 102 has a lip tip end portion (not shown) in a wedge shape. That is, the sealing device 10 is excellent in durability and can increase an area of contact with the shaft 102.

The sealing device 10 has the elastic portion 30 made of conductive rubber and can secure continuity between the output shaft 102 and the casing 103 via the elastic portion 30. It is thus possible to allow a leakage current generated in the motor drive unit 100 to escape from the output shaft 102 to the casing 103 via the elastic portion 30 and suppress generation of noise. In this case, since the elastic portion 30 itself has conductivity, there is no need to separately prepare a metal brush or the like to achieve continuity between the output shaft 102 and the casing 103, and it is possible to minimize the number of parts and achieve simplification and space savings.

In the sealing device 10, the tightening force of the garter spring 38 presses the lip contact surface 36s of the lip tip end portion 36 against the outer peripheral surface 102g of the output shaft 102. This allows stabilization of a state of contact with the outer peripheral surface 102g of the output shaft 102, i.e., a state of continuity and allows stable reduction in generation of noise.

Specifically, even if the output shaft 102 is eccentric, it is possible to provide the sealing device 10 with eccentricity trackability that is an ability to bring the lip contact surface 36s into stable contact with the outer peripheral surface 102g of the output shaft 102 with the tightening force of the garter spring 38. This allows stable reduction in generation of noise.

Even when rubber of the elastic portion 30 hardens in a low-temperature environment at, for example, 0°C or less, the sealing device 10 can press the lip contact surface 36s hard against the outer peripheral surface 102g of the output shaft 102 with the tightening force of the garter spring 38, it is possible to maintain a state of continuity between the output shaft 102 and the casing 103 and stably reduce generation of noise. Since the lip contact surface 36s is a conical surface in an annular shape, the sealing device 10 can make the state of contact more stable with the tightening force of the garter spring 38. This allows maintenance of the state of continuity between the output shaft 102 and the casing 103 and more stable reduction in generation of noise.

In the sealing device 10, when the lip portion 35 of the elastic portion 30 wears or abrades after long-term use, an area of contact between the lip contact surface 36s of the lip tip end portion 36 and the outer peripheral surface 102g of the output shaft 102 may decrease partially. Even in this case, since the sealing device 10 presses the lip contact surface 36s of the lip tip end portion 36 of the elastic portion 30 hard against the outer peripheral surface 102g of the output shaft 102 with the tightening force of the garter spring 38, it is possible to maintain the state of continuity between the output shaft 102 and the casing 103 and stably reduce generation of noise.

The sealing device 10 according to the first embodiment of the present invention has the conductive grease G adherent to the inner peripheral surface 83 of the elastic portion 30 in the elastic portion 30 composed of the garter spring 38 and the elastic body having conductivity. The conductive grease G intervening between the elastic portion 30 and the output shaft 102 can reduce the electrical resistance between the output shaft 102 and the casing 103 and stably further reduce generation of noise.

Although the sealing device 10 according to the first embodiment of the present invention has two lips, the lip portion 35 and the dust lip 85, the conductive grease G is adherent to the inner peripheral surface 83. With lubrication with grease, it is possible to achieve reduction in sliding friction and suppress increase in sliding friction due to increase in the number of lips.

### <Second Embodiment>

Hereinafter, a second embodiment of the present invention will be described with reference to the drawings. Hereinafter, components having functions identical or similar to the sealing device 10 according to the first embodiment described above are denoted by identical reference numerals, and a description of the components will be omitted. Only different components will be described.

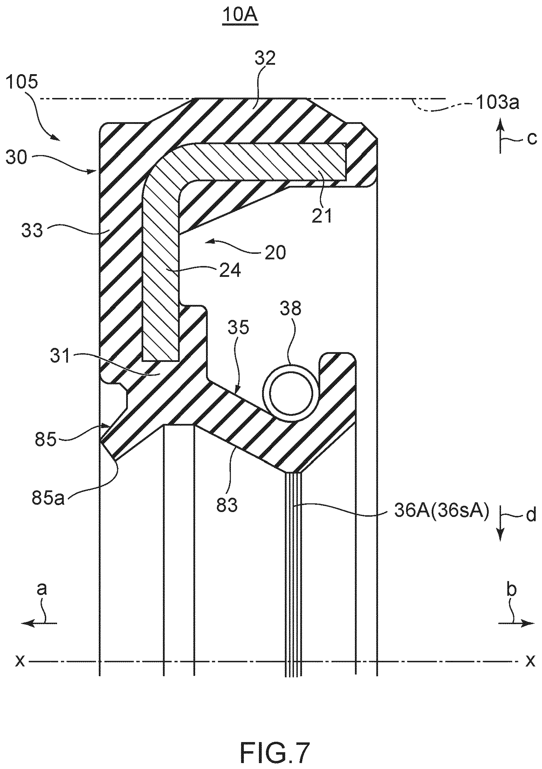

Fig. 7 is a sectional view of a cross-section along an axis showing a configuration of a sealing device 10A according to the second embodiment of the present invention. As shown in Fig. 7, in the sealing device 10A according to the second embodiment, a lip contact surface 36sA in a lip tip end portion 36A is different from the lip contact surface 36s in the lip tip end portion 36 that the sealing device 10 described earlier has. Specifically, the lip contact surface 36sA has a shape with asperities which is formed in an annular shape centered on an axis x and is corrugated at a surface in an annular shape which faces an outer peripheral surface 102g of an output shaft 102.

In the sealing device 10A configured in the above-described manner, the shape with asperities that is corrugated is formed at the lip contact surface 36sA. It is possible to reduce friction due to sliding of the lip contact surface 36sA on the outer peripheral surface 102g of the output shaft 102 while increasing a width of contact with the outer peripheral surface 102g of the output shaft 102. In the sealing device 10A, conductive grease G adherent in an inter-lip space S on an inner peripheral surface 83 also adheres to the lip contact surface 36sA. It is thus possible to reduce friction due to sliding of the lip contact surface 36sA on the outer peripheral surface 102g of the output shaft 102 while securing continuity between the sealing device 10A and the output shaft 102 and improve durability of the sealing device 10A and the output shaft 102.

### <Third Embodiment>

Hereinafter, a third embodiment of the present invention will be described with reference to the drawings. Hereinafter, components having functions identical or similar to the sealing device 10 according to the first embodiment and the sealing device 10A according to the second embodiment described above are denoted by identical reference numerals, and a description of the components will be omitted. Only different components will be described.

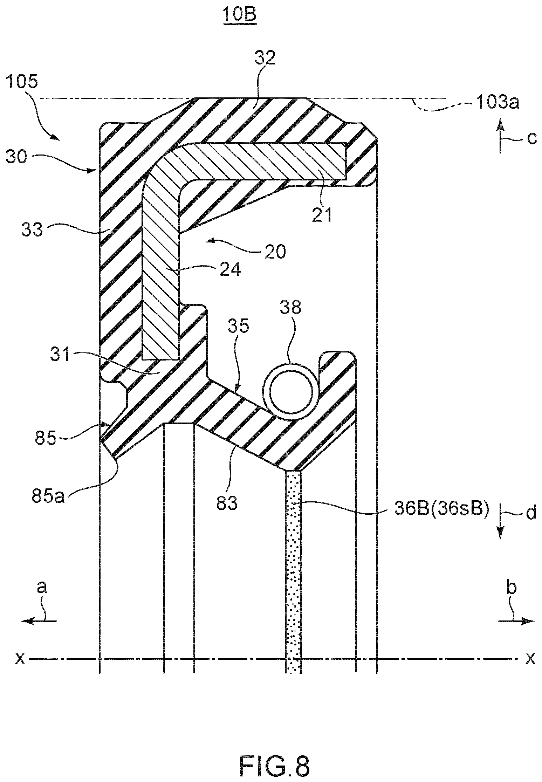

Fig. 8 is a sectional view of a cross-section along an axis showing a configuration of a sealing device 10B according to the third embodiment of the present invention. As shown in Fig. 8, in the sealing device 10B according to the third embodiment, a lip contact surface 36sB in a lip tip end portion 36B is different from the lip contact surface 36sA in the lip tip end portion 36A that the sealing device 10A described earlier has. Specifically, the lip contact surface 36sB has a shape with asperities which is pearskin-like at a surface in an annular shape which faces an outer peripheral surface 102g of an output shaft 102. In the surface in the annular shape of the lip contact surface 36sB, a surface in a shape with a plurality of asperities like the lip contact surface 36sA described earlier may have a shape with asperities which is pearskin-like.

In the sealing device 10B configured in the above-described manner, the shape with asperities that is pearskin-like is formed at the lip contact surface 36sB. It is possible to reduce friction due to sliding of the lip contact surface 36sB on the outer peripheral surface 102g of the output shaft 102 while increasing a width of contact with the outer peripheral surface 102g of the output shaft 102. In the sealing device 10B, conductive grease G adherent in an inter-lip space S on an inner peripheral surface 83 also adheres to the lip contact surface 36sB. It is thus possible to reduce friction due to sliding of the lip contact surface 36sB on the outer peripheral surface 102g of the output shaft 102 while securing continuity between the sealing device 10B and the output shaft 102 and improve durability of the sealing device 10B and the output shaft 102.

### <Other Embodiments>

The embodiments of the present invention have been described above. The present invention, however, is not limited to the sealing devices 10, 10A, and 10B according to the embodiments and includes every aspect included in the scope of the appended claims. Components may be appropriately and selectively combined so as to achieve at least a part of the above-described problems and effects. For example, the shape, the material, the arrangement, the size, and the like of each component in the embodiments can be appropriately changed depending on a specific usage mode of the present invention.

For example, in the sealing device 10 according to the above-described embodiment of the present invention, the elastic portion 30 has one dust lip, i.e., the dust lip 85. The present invention, however, is not limited to this. The elastic portion 30 may be one which includes an interior side dust lip on the interior side b in addition to the dust lip 85 and has two dust lips. In this case, the interior side dust lip only needs to extend from the base 31 toward the exterior side and obliquely toward the inner periphery side at the inner peripheral surface 83 on an interior side b as viewed from the dust lip 85 and between the dust lip 85 and the end portion on the exterior side a of the lip contact surface 36s of the lip tip end portion 36 of the lip portion 35 and have a shape, such as a conical tubular shape or an approximately conical tubular shape, like the dust lip 85. Additionally, the elastic portion 30 may be one which has another dust lip in addition to the interior side dust lip and the dust lip 85 and has three or more dust lips. If the elastic portion 30 has two or more dust lips, the inner peripheral surface 83 may be an inner peripheral surface of the elastic portion 30 which extends from the lip contact surface 36s of the lip portion 35 to a tip end of a dust lip endmost on the exterior side or an inner peripheral surface of the elastic portion 30 which extends from the lip contact surface 36s of the lip portion 35 to a tip end of a dust lip in the middle on an interior side as viewed from a dust lip endmost on the exterior side. Alternatively, the inner peripheral surface 83 may be an inner peripheral surface of the elastic portion 30 between a dust lip and a dust lip. For example, in the sealing device 10, the inner peripheral surface 83 is composed of the inner peripheral surfaces 83a and 83c. The inner peripheral surface 83, however, may be one composed of the inner peripheral surface 83a and a portion on an interior side as viewed from the tip end 85a of the inner peripheral surface 83c or may be one composed of the inner peripheral surface 83a and a portion on an exterior side as viewed from the tip end 85a of the inner peripheral surface 83c. The inner peripheral surface 83 may not be a continuous surface but may be a discontinuous surface. Alternatively, the inner peripheral surface 83 may extend only between the lip contact surface 36s and a tip end of a dust lip or may extend only between a tip end of a dust lip and a tip end of a dust lip. Additionally, the sealing device 10 may be one in which the garter spring 38 that is an elastic member in an annular shape as a tightening force provision member is not placed on the outer periphery side (the direction of the arrow c) on the opposite side of the lip portion 35 from the lip tip end portion 36.

### List of Reference Signs

10, 10A, 10B sealing device,
20 reinforcement ring,
21 circular tubular portion,
24 disk portion,
30 elastic portion,
31 base,
32 gasket portion,
33 cover portion,
35 lip portion,
36, 36A, 36B lip tip end portion,
36s, 36sA, 36sB lip contact surface,
38 garter spring (tightening force provision member),
85 dust lip,
83, 83a, 83c inner peripheral surface,
85a tip end,
100 motor drive unit,
101 electric motor,
102 output shaft (shaft),
103 casing (outer periphery side member),
104 bearing,
105 opening,
121 pulley,
f1 interference,
G conductive grease,
S inter-lip space,
x axis

## Claims

1. A sealing device (10) which is attached between a shaft (102) and an outer periphery side member (103) arranged around an axis (x) on an outer periphery side as viewed from the shaft (102), slidably contacts an outer peripheral surface (102g) of the shaft (102), and seals a void between the shaft (102) and the outer periphery side member (103), comprising:
a reinforcement ring (20) in an annular shape around the axis (x);
an elastic portion (30) which is attached to the reinforcement ring (20) and is made of an elastic body in an annular shape around the axis (x) and having conductivity; and
conductive grease (G), wherein
the elastic portion (30) has a base (31), a lip portion (35) which extends from the base (31) along the axis (x), and at least one dust lip (85) in an annular shape around the axis (x),
wherein
the lip portion (35) has, at a tip end of the lip portion (35), a lip tip end portion (36) having a lip contact surface (36s) which is formed to be capable of contacting the outer peripheral surface (102g) of the shaft (102) such that the outer peripheral surface (102g) of the shaft (102) is slidable,
the lip contact surface (36s) has a surface in an annular shape which faces the outer peripheral surface (102g) of the shaft (102),
the conductive grease (G) is adherent to an inner peripheral surface (83) which is a surface in an annular shape facing an inner periphery side of the elastic portion (30) so as to be present in at least a part of an inter-lip space (S) which is a space in an annular shape formed between the lip contact surface (36s) and the dust lip (85) in a direction of the axis (x),
the elastic portion (30) has a tightening force provision member (38) which is an elastic member in an annular shape,
the tightening force provision member (38) is placed on an outer periphery side of the lip portion (35) in the lip tip end portion (36) and provides a tightening force which presses the lip contact surface (36s) against the outer peripheral surface (102g) of the shaft (102), **characterized in that**
a volume of the conductive grease (G) adherent to the inner peripheral surface (83) is not larger than the capacity of the inter-lip space (S) in the usage state, and
the reinforcement ring (20) has a circular tubular portion (21) which is a portion in a circular tubular shape or an approximately circular tubular shape extending in the direction of the axis (x), wherein the circular tubular portion (21) is formed such that the sealing device (10) can fit on the inner peripheral surface (103a) of the outer periphery side member (103) and is capable of contacting and fitting on the inner peripheral surface (103a) of the outer periphery side member (103) via a portion of the elastic portion (30), wherein the conductive grease (G) attached to the inner peripheral surface (83) electrically connects the inner peripheral surface (83) of the elastic portion (30) and the outer peripheral surface (102g) of the shaft (102) except at portions of contact of the elastic portion (30) with the shaft (102) to establish continuity, to form a continuity path between the shaft (102) and the outer periphery side member (103) except at the portions of contact of the elastic portion (30) with the shaft (102) and to reduce an electrical resistance between the shaft (102) and the outer periphery side member (103).

2. The sealing device according to claim 1, wherein
the tightening force provision member (38) is placed at a position on an opposite side of the lip portion (35) from the lip contact surface (36s).

3. The sealing device according to any one of claims 1 or 2, comprising
an interior side dust lip which is formed between the lip contact surface (36s) and the dust lip (85) in the direction of the axis (x) in the inter-lip space.

4. The sealing device according to any one of claims 1 to 3, wherein
the lip contact surface (36s) has a shape with asperities for the outer peripheral surface (102g) of the shaft (102).

## Patentansprüche

1. Abdichtvorrichtung (10), die zwischen einer Welle (102) und einem außenumfangsseitigen Element (103) angebracht wird, das um eine Achse (x) an einer Außenumfangsseite unter Betrachtung von der Welle (102) angeordnet ist, gleitfähig mit einer Außenumfangsfläche (102g) der Welle (102) in Kontakt steht und einen Zwischenraum zwischen der Welle (102) und dem außenumfangsseitigen Element (103) abdichtet, mit:
einem Verstärkungsring (20) in einer ringartigen Form um die Achse (x) herum;
einem elastischen Abschnitt (30), der an dem Verstärkungsring (20) angebracht ist und aus einem elastischen Körper in einer ringartigen Form um die Achse (x) herum ausgebildet ist und eine Leitfähigkeit besitzt; und
leitfähigem Fett (G), wobei
der elastische Abschnitt (30) eine Basis (31), einen Lippenabschnitt (35), der sich von der Basis (31) entlang der Achse (x) erstreckt, und zumindest einer Staublippe (85) in einer ringartigen Form um die Achse (x) herum hat,
wobei
der Lippenabschnitt (35) an einem Endstückende des Lippenabschnittes (35) einen Lippenendstückendabschnitt (36) hat, der eine Lippenkontaktfläche (36s) hat, die so ausgebildet ist, dass sie mit der Außenumfangsfläche (102g) der Welle (102) so in Kontakt gelangen kann, dass die Außenumfangsfläche (102g) der Welle (102) gleitfähig ist,
die Lippenkontaktfläche (36s) eine Oberfläche in einer ringartigen Form hat, die der Außenumfangsfläche (102g) der Welle (102) zugewandt ist,
das leitfähige Fett (G) an einer Innenumfangsfläche (83), die eine Oberfläche in einer ringartigen Form ist, die einer Innenumfangsseite des elastischen Elementes (30) zugewandt ist, so anhaftet, dass es in zumindest einem Abschnitt eines Zwischenlippenraumes (S) vorhanden ist, der ein Raum in einer ringartigen Form ist, die zwischen der Lippenkontaktfläche (36s) und der Staublippe (85) in einer Richtung der Achse (x) ausgebildet ist,
der elastische Abschnitt (30) ein Festziehkraftvorsehelement (38) hat, das ein elastisches Element in einer ringartigen Form ist,
das Festziehkraftvorsehelement (38) an einer Außenumfangsseite des Lippenabschnittes (35) in dem Lippenendstückendabschnitt (36) angeordnet ist und eine Festziehkraft vorsieht, die die Lippenkontaktfläche (36s) gegen die Außenumfangsfläche (102g) der Welle (102) drückt,
**dadurch gekennzeichnet, dass**
ein Volumen des leitfähigen Fettes (G) benachbart zu der Innenumfangsfläche (83) nicht größer als das Fassungsvermögen des Zwischenlippenraumes (S) im Anwendungszustand ist, und
der Verstärkungsring (20) einen kreisartigen rohrartigen Abschnitt (21) hat, der ein Abschnitt in einer kreisartigen rohrartigen Form oder einer annähernd kreisartigen rohrartigen Form ist, die sich in einer Richtung der Achse (x) erstreckt, wobei der kreisartige rohrartige Abschnitt (21) so ausgebildet ist, dass die Abdichtvorrichtung (10) an der Innenumfangsfläche (103a) des außenumfangsseitigen Elementes (103) sitzen kann und dazu in der Lage ist, an der Innenumfangsfläche (103a) des außenumfangsseitigen Elementes (103) über einen Abschnitt des elastischen Abschnittes (30) in Kontakt zu stehen und eingesetzt zu werden, wobei das leitfähige Fett (G), das an der Innenumfangsfläche (83) angebracht ist, die Innenumfangsfläche (83) des elastischen Abschnittes (30) und die Außenumfangsfläche (102g) der Welle (102) mit Ausnahme an Kontaktabschnitten des elastischen Abschnittes (30) mit der Welle (102) elektrisch in Kontakt steht, um eine Kontinuität auszubilden zum Ausbilden eines Kontinuitätspfades zwischen der Welle (102) und dem außenumfangsseitigen Element (103) mit Ausnahme an den Kontaktabschnitten des elastischen Abschnittes (30) mit der Welle (102), und zum Verringern eines elastischen Widerstandes zwischen der Welle (102) und dem außenumfangsseitigen Element (103).

2. Abdichtvorrichtung gemäß Anspruch 1, wobei
das Festziehkraftvorsehelement (38) an einer Position an einer von der Lippenkontaktfläche (36s) entgegengesetzten Seite des Lippenabschnittes (35) angeordnet ist.

3. Abdichtvorrichtung gemäß einem der Ansprüche 1 oder 2, mit
einer innenseitigen Staublippe, die zwischen der Lippenkontaktfläche (36s) und der Staublippe (85) in der Richtung der Achse (x) in den Zwischenlippenraum ausgebildet ist.

4. Abdichtvorrichtung gemäß einem der Ansprüche 1 bis 3, wobei
die Lippenkontaktfläche (36s) eine Form mit Unebenheiten für die Außenumfangsfläche (102g) der Welle (102) hat.

## Revendications

1. Dispositif d'étanchéité (10) qui est fixé entre un arbre (102) et un élément latéral périphérique extérieur (103) disposé autour d'un axe (x) sur un côté périphérique extérieur tel que vu depuis l'arbre (102), qui est en contact coulissant avec une surface périphérique extérieure (102g) de l'arbre (102), et qui scelle un espace vide entre l'arbre (102) et l'élément latéral périphérique extérieur (103), comprenant :
une bague de renfort (20) de forme annulaire autour de l'axe (x) ;
une partie élastique (30) qui est fixée à la bague de renfort (20) et qui est constituée d'un corps élastique de forme annulaire autour de l'axe (x) et ayant une conductivité ; et
une graisse conductrice (G), dans lequel
la partie élastique (30) a une base (31), une partie de lèvre (35) qui s'étend depuis la base (31) le long de l'axe (x), et au moins une lèvre anti-poussière (85) de forme annulaire autour de l'axe (x),
dans lequel
la partie de lèvre (35) a, à une extrémité de la partie de lèvre (35), une partie d'extrémité de lèvre (36) ayant une surface de contact de lèvre (36s) qui est formée de manière à pouvoir entrer en contact avec la surface périphérique extérieure (102g) de l'arbre (102) de telle sorte que la surface périphérique extérieure (102g) de l'arbre (102) puisse coulisser,
la surface de contact de lèvre (36s) a une surface de forme annulaire qui fait face à la surface périphérique extérieure (102g) de l'arbre (102),
la graisse conductrice (G) adhère à une surface périphérique intérieure (83) qui est une surface de forme annulaire faisant face à un côté périphérique intérieur de la partie élastique (30) de manière à être présente dans au moins une partie d'un espace inter-lèvre (S) qui est un espace de forme annulaire formé entre la surface de contact de lèvre (36s) et la lèvre anti-poussière (85) dans une direction de l'axe (x),
la partie élastique (30) a un élément de fourniture de force de serrage (38) qui est un élément élastique de forme annulaire,
l'élément de fourniture de force de serrage (38) est placé sur un côté périphérique extérieur de la partie de lèvre (35) dans la partie d'extrémité de pointe de lèvre (36) et fournit une force de serrage qui presse la surface de contact de lèvre (36s) contre la surface périphérique extérieure (102g) de l'arbre (102),
**caractérisé en ce que**
un volume de la graisse conductrice (G) adhérant à la surface périphérique interne (83) n'est pas supérieur à la capacité de l'espace inter-lèvre (S) à l'état d'utilisation, et
l'anneau de renfort (20) a une partie tubulaire circulaire (21) qui est une partie de forme tubulaire circulaire ou de forme tubulaire approximativement circulaire s'étendant dans la direction de l'axe (x), dans lequel la partie tubulaire circulaire (21) est formée de telle sorte que le dispositif d'étanchéité (10) puisse être placé sur la surface périphérique intérieur (103a) de l'élément latéral de périphérie extérieure (103) et puisse entrer en contact et être placé sur la surface périphérique intérieure (103a) de l'élément latéral périphérique extérieure (103) via une partie de la partie élastique (30), dans lequel la graisse conductrice (G) fixée à la surface périphérique intérieure (83) relie électriquement la surface périphérique intérieure (83) de la partie élastique (30) et la surface périphérique extérieure (102g) de l'arbre (102) sauf à des parties de contact de la partie élastique (30) avec l'arbre (102) pour établir une continuité, pour former un chemin de continuité entre l'arbre (102) et l'élément latéral périphérique extérieur (103) sauf aux parties de contact de la partie élastique (30) avec l'arbre (102) et pour réduire une résistance électrique entre l'arbre (102) et l'élément latéral périphérique extérieur (103).

2. Dispositif d'étanchéité selon la revendication 1, dans lequel
l'élément de fourniture de force de serrage (38) est placé à une position sur un côté opposé de la partie de lèvre (35) par rapport à la surface de contact de lèvre (36s).

3. Dispositif d'étanchéité selon l'une quelconque des revendications 1 ou 2, comprenant
une lèvre anti-poussière côté intérieur qui est formée entre la surface de contact de lèvre (36s) et la lèvre anti-poussière (85) dans la direction de l'axe (x) dans l'espace inter-lèvre.

4. Dispositif d'étanchéité selon l'une quelconque des revendications 1 à 3, dans lequel
la surface de contact de lèvre (36s) a une forme avec des aspérités pour la surface périphérique extérieure (102g) de l'arbre (102).
